Europäisches Patentamt

European Patent Office

Office européen des brevets

(19)

(11) Veröffentlichungsnummer : **0 360 097 B1**

# EUROPÄISCHE PATENTSCHRIFT

(12)

(45) Veröffentlichungstag der Patentschrift :
**11.11.92 Patentblatt 92/46**

(51) Int. Cl.$^5$ : **F24D 3/16**

(21) Anmeldenummer : **89116641.5**

(22) Anmeldetag : **08.09.89**

(54) **Deckenstrahlplatte.**

(30) Priorität : **13.09.88 DE 8811570 U**

(43) Veröffentlichungstag der Anmeldung :
**28.03.90 Patentblatt 90/13**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI LU NL SE**

(56) Entgegenhaltungen :
**CH-A- 382 945**
**DE-A- 2 138 667**

(73) Patentinhaber : **Klostermann, Harald**
**Pellenberg 30**
**W-5750 Menden 1 (DE)**

(72) Erfinder : **Klostermann, Harald**
**Pellenberg 30**
**W-5750 Menden 1 (DE)**

(74) Vertreter : **Dörner, Lothar, Dipl.-Ing. et al**
**Stresemannstrasse 15**
**W-5800 Hagen 1 (DE)**

EP 0 360 097 B1

Jouve, 18, rue Saint-Denis, 75001 PARIS

## Beschreibung

**Technisches Gebiet:**

Die Erfindung betrifft eine Deckenstrahlplatte, bei der von einem Heizmedium durchströmte Stahlrohre in parallel zueinander im Abstand angeordneten Mulden vorgesehen sind, die mit ihren äußersten - untersten - Begrenzungsflächen und -linien in der Ebene der Unterseite eines profilierten Stahlblechs angeordnet sind, in das sie unter Bildung je einer Schattenfuge auf jeder Längsseite nach innen gedrückt sind.

Deckenstrahlplatten bestehen aus einem profilierten Stahlblech, und aus Stahlrohren, die an dem Stahlblech befestigt und von einem Heizmedium durchströmt sind. Zur Aufnahme einer Isolierung sind die seitlichen Ränder des Stahlblechs nach oben rechtwinklig abgekantet und durch eine Umbördelung zusätzlich versteift, die auch zum Niederhalten der Isolierung benutzt werden kann. Für die Befestigung und die zusätzliche Versteifung sind Aufhängequerstege in das Stahlblech eingeschweißt. An den Stirnseiten der Rohre sind Sammelkästen vorgesehen.

Deckenstrahlplatten haben sich als Großraumheizung, z.B. für Hallen, und andere Anwendungsgebiete der Strahlheizung bewährt. Sie haben hohe Wirtschaftlichkeit. Sie weisen kurze Aufheizzeiten, gute Regelbarkeit und günstige Temperaturverteilung im Raum auf, auch in vertikaler Richtung. Deckenstrahlplatten verursachen keine Luftbewegung und somit keine Staubaufwirbelung und sind zugfrei. Durch die Installation an der Decke haben sie keinen Platzbedarf auf dem Boden oder der Wand.

**Stand der Technik:**

Eine Deckenstrahlplatte der eingangs genannten Art ist aus CH-A-382 945 bekannt. Bei der bekannten Deckenstrahlplatte sind die Stahlrohre mit Hilfe von Riegeln in die Mulden gedrückt gehalten. Die Mulden haben dreieckigen Querschnitt. Die Scheitel der - auf die Spitze gestellten - Dreiecke erscheinen als durchgehende parallele Kanten. Die Längs-Mittelachse jedes Stahlrohres liegt wesentlich oberhalb der beiden, die Mulde innen begrenzenden Kanten; eine unterste Anlagefläche für das Stahlrohr ist nicht vorhanden. Aus DE-A-21 38 667 ist außerdem eine Deckenstrahlplatte bekannt, bei der jede Mulde einen Querschnitt in der Form eines Halbzylinders aufweist. Der Halbzylindermantel ist aus der Unterseite des ebenen Stahlblechs nach außen/unten vorgestülpt. In die Mulde ist das Stahlrohr eingeschweißt. Bei beiden bekannten Deckenstrahlplatten ist die ansonsten glatte und klare Linienführung beeinträchtigt, die sich auch durch die Unsichtbarkeit der Aufhängevorrichtung ergibt. Außerdem wird eine innige Berührung der Rohre mit dem Stahlblech im Bereich der Mulde nicht erreicht.

**Darstellung der Erfindung:**

Hier will die Erfindung Abhilfe schaffen. Der Erfindung liegt die Aufgabe zugrunde, eine Deckenstrahlplatte der eingangs genannten Art so auszubilden, daß sie sowohl hinsichtlich der Wärmeübertragung als auch hinsichtlich Ihres Aussehens verbessert ist. Gemäß der Erfindung wird diese Aufgabe dadurch gelöst, daß jede Mulde im Querschnitt als Trapez ausgebildet ist, dessen Höhe gleich dem Außenhalbmesser des aufgenommenen Stahlrohres ist, das außer an der Unterseite an den beiden Seitenwänden der Mulde anliegt und mit dem Stahlblech verschweißt ist.

Bei der Erfindung bildet die Unterseite des Stahlblechs die am weitesten in den Raum, in dem die Deckenstrahlplatte angeordnet ist, hineinragende Stelle. Sie liegt mit der Unterseite des Trapezes in derselben Ebene. Es ergibt sich eine glatte und klare Linienführung. Auch in im übrigen glatte Deckenkonstruktionen bzw. Kassetten- oder Paneeldecken mit ihren Schattenfugen fügt sich die Deckenstrahlplatte vorteilhaft ein. Die Schattenfugen geben der Deckenstrahlplatte darüber hinaus eine größere Heizfläche, was eine größere Wärmeabgabe nach unten zur Folge hat. Die Schattenfugen haben auch eine größere Stabilität der Deckenstrahlplatte zur Folge; es tritt weniger Faltenwurf auf.

In Weiterbildung der Erfindung sind die Stahlrohre mit dem Stahlblech im Bereich der Schattenfugen verschweißt. Das Verschweißen kann für jedes Rohr in nur einer Schattenfuge erfolgen; zweckmäßig erfolgt es jedoch in beiden. Dadurch, daß bei dieser Weiterbildung die Schweißpunkte in der Schattenfuge liegen, sind sie nicht mehr sichtbar, jedenfalls nicht mehr nach der Aufhängung der Deckenstrahlplatte. Die Deckenstrahlplatte ist auch hierdurch ästhetisch weiter verbessert. Dadurch, daß zwei Schweißlinien in den Schattenfugen anstelle einer Schweißlinie im Scheitelpunkt des Rohres möglich sind; wird die Wärmeübertragung und damit die Leistung verbessert; denn es ergibt sich einmal eine engere Anlage der Rohre an dem Stahlblech, zum anderen eine Verkürzung der Wärmeübergangswege zum ebenen Teil des Stahlblechs.

**Kurze Beschreibung der Zeichnungen:**

Ein Ausführungsbeispiel der Erfindung ist in der Zeichnung dargestellt und wird im folgenden näher beschrieben. Es zeigen:
Fig. 1 in perspektivischer Darstellung eine Deckenstrahlplatte von oben gesehen;
Fig. 2 die Stirnansicht einer Deckenstrahlplatte.

**Bester Weg zur Ausführung der Erfindung:**

Eine Deckenstrahlplatte besteht aus einem Stahlblech 1, mit dem Stahlrohre 2 verschweißt sind.

Die seitlichen Ränder 11 des Stahlblechs 1 sind nach oben rechtwinklig abgekantet und durch eine Umbördelung 12 zusätzlich versteift. Parallel zu den Rändern 11 sind in gleichbleibendem Abstand Mulden 13 in dem Stahlbelch 1 vorgesehen.

Die Mulden 13 sind mit ihren äußersten - untersten - Begrenzungsflächen 14 in der Ebene der Unterseite 15 des Stahlblechs 1 angeordnet. Die Mulden 13 sind in das Stahlblech 1 unter Bildung je einer Schattenfuge 16 auf jeder Längsseite mindestens um den Betrag eines Halbmessers der Stahlrohre 2 nach innen gedrückt.

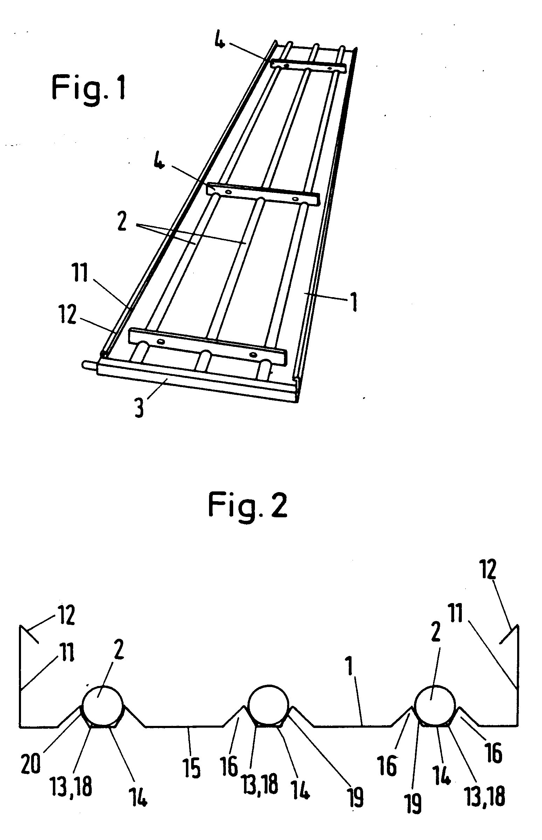

Bei der in Figur 2 dargestellten Ausführung ist jede Mulde 13 als Trapez 18 ausgebildet. Die Höhe des Trapez 18 ist gleich dem Außenhalbmesser des aufgenommenen Stahlrohres 2. Das Stahlrohr 2 liegt außer an der Unterseite 15 an den beiden Seitenwänden 19 an. Bei den mittig und rechts dargestellten Mulden 13 liegen die Seitenwände 19 als Tangentialflächen an dem Stahlrohr 2 an. Bei der links dargestellten Mulde 13 sind die Seitenwände 19 in dem Bereich, in dem sie an dem Stahlrohr 2 . anliegen, als Teilzylinder 20 ausgebildet.

Die Stahlrohre 2 sind von einem Heizmedium durchströmt. Jedes der Stahlrohre 2 ist in eine der Mulden 13 geschweißt. Vorteilhaft sind die Stahlrohre 2 mit dem Stahlblech 1 im Bereich der Schattenfugen 16 verschweißt, im Ausführungs beispiel entlang den Berührungslinien.

Im Ausführungsbeispiel münden die Stahlrohre 2 an einer Stirnseite in einem Sammelkasten 3. Mehrere der dargestellten Deckenstrahlplatten können in Längsrichtung hintereinander geschaltet sein. Das Ende einer solchen Hintereinanderschaltung von Deckenstrahlplatten bildet jeweils ein Sammelkasten 3. Für die Befestigung der Deckenstrahlplatte an einer nicht dargestellten Decke und für die zusätzliche Versteifung sind Aufhängequerstege 4 in Längsrichtung im Abstand voneinander in das Stahlblech 1 geschweißt.

Alle Ausführungen der Deckenstrahlplatte können mit Hilfe von Wechseleinsätzen in demselben Werkzeug hergestellt werden. Bei gleichen Investitions- und Fertigungskosten ergeben sich folglich zwei Varianten der Deckenstrahlplatte,

Gewerbliche Verwertbarkeit:

Die Deckenstrahlplatte dient als Großraumheizung, z.B. für Hallen und ähnliche Gebäude.

## Patentansprüche

1. Deckenstrahlplatte, bei der von einem Heizmedium durchströmte Stahlrohre (2) in parallel zueinander im Abstand angeordneten Mulden (13) vorgesehen sind, die mit ihrem äußersten - untersten - Begrenzungsflächen und -linien (14) in der Ebene der Unterseite (15) eines profilierten Stahlblechs (1) angeordnet sind, in das sie unter Bildung je einer Schattenfuge (16) auf jeder Längsseite nach innen gedrückt sind, dadurch gekennzeichnet, daß jede Mulde (13) im Querschnitt als Trapez (18) ausgebildet ist, dessen Höhe gleich dem Außenhalbmesser des aufgenommenen Stahlrohres (2) ist, das außer an der Unterseite (15) an den beiden Seitenwänden (19) der Mulde (13) anliegt und mit dem Stahlblech (1) verschweißt ist.

2. Deckenstrahlplatte nach Anspruch 1, dadurch gekennzeichnet, daß der an dem Stahlrohr (2) anliegende Teil der Seitenwände (19) der Mulde (13) als Teilzylinder (20) ausgebildet ist.

3. Deckenstrahlplatte nach Anspruch 1 oder 2, dadurch gekennzeichnet, daß die Stahlrohre (2) mit dem Stahlblech (1) im Bereich der Schattenfugen (16) verschweißt sind.

## Claims

1. An overhead radiation heating plate, in which steel tubes (2) through which a heating medium flows are provided in hollows (13), which are arranged parallel to one another spaced apart and with their outermost - lowermost - boundary surfaces and outlines (14) in the plane of the underside (15) of a profiled steel sheet (1), in which said hollows are pressed inwards forming a shadow seam (16) on each longitudinal side, characterised in that each hollow (13) is designed in cross section as a trapezoid (18), whose height is equal to the external radius of the accommodated steel tube (2), which in addition to resting against the underside (15) rests against the two side walls (19) of the hollow (13) and is welded to the steel sheet (1).

2. An overhead radiation heating plate according to claim 1, characterised in that the section of the side walls (19) of the hollow (13) resting against the steel tube (2) is designed as a partial cylinder (20).

3. An overhead radiation heating plate according to claim 1 or 2, characterised in that the steel tubes (2) are welded to the steel plate (1) in the region of the shadow seams (16).

## Revendications

1. Panneau radiant suspendu pour lequel des tubes d'acier (2) parcourus par un fluide caloporteur sont prévus dans ces cuvettes (13) disposées parallèlement à distance les unes des autres dont les surfaces et lignes périphériques (14) situées le plus à extérieur - le plus bas - se situent dans le plan de la face inférieure (15) d'une tôle d'acier (1) profilée dans laquelle elles sont enfoncées vers l'intérieur, avec formation de respectivement un joint caché (16) sur chacun des côtés longitudinaux, **caractérisé en ce** que chaque cuvette (13) présente une section transversale de forme trapézoïdale (18) dont la hauteur est égale au rayon extérieur du tube d'acier (2) inséré lequel est appliqué non seulement contre la face inférieure (15) mais aussi contre les parois latérales (19) de la cuvette (13) et soudé sur la tôle d'acier (1).

2. Panneau radiant suspendu selon la revendication 1, caractérisé en ce que la partie des parois latérales (19) de la cuvette (13) appliquée contre le tube d'acier (2) présente la forme d'un cylindre partiel (20).

3. Panneau radiant suspendu selon l'une des revendications 1 ou 2, caractérisé en ce que les tubes d'acier (2) sont soudés sur la tôle d'acier (1) dans la région des joints cachés (16).

# Fig. 1

# Fig. 2